# EUROPÄISCHE PATENTSCHRIFT

(11) **EP 2 449 296 B1**
(45) Veröffentlichungstag und Bekanntmachung des Hinweises auf die Patenterteilung: **03.04.2013**
(21) Anmeldenummer: 10725771.9
(22) Anmeldetag: 22.06.2010
(51) Int. Cl.: F16K 11/074

(54) **VENTIL**
VALVE
SOUPAPE

(30) Priorität: 30.06.2009 DE 102009027352
(43) Veröffentlichungstag der Anmeldung: 09.05.2012
(73) Patentinhaber: Qiagen GmbH, 40724 Hilden (DE)
(72) Erfinder: DAHLKE, Rainer, 41564 Kaarst (DE); JEZIORSKI, Markus, 40764 Langenfeld (DE); ATTIG, Hans, 40215 Düsseldorf (DE); CLAUßEN, Jan, 65185 Wiesbaden (DE); SCHAEFFER, Eva, 55118 Mainz (DE)
(74) Vertreter: Struck, Norbert
(86) Internationale Anmeldenummer: PCT/EP2010/058810
(87) Internationale Veröffentlichungsnummer: WO 2011/000738

(56) Entgegenhaltungen:
- DE-A1- 2 722 363
- GB-A- 1 195 913
- US-A- 5 803 117
- US-A- 6 012 488
- US-A1- 2008 016 891

## Beschreibung

Die Erfindung betrifft ein System mit einem Drehventil und einer Betätigungsvorrichtung für das Drehventil. Die Erfindung betrifft ferner ein zugehöriges Durchflusssystem mit einem Drehventil. Die Erfindung betrifft außerdem eine Verwendung der beanspruchten Vorrichtungen. Das Durchflusssystem ist insbesondere ein Mikrodurchflusssystem. Mit einem Durchflusssystem kann der Transport einer Flüssigkeit gesteuert werden.

Ein Mikrodurchflusssystem ist eine Vorrichtung mit Kanälen, deren Durchmesser kleiner als 1 mm ist. Insbesondere sind die Kanaldurchmesser maximal 150 µm groß. Ein solches Mikrodurchflusssystem wird in der Regel unter Anwendung von Halbleitertechniken hergestellt. Es ist daher auch bekannt, Halbleiter als Material zu wählen, um Kanäle zu fertigen. Aber auch andere Materialien wie Polymere oder Glas können eingesetzt werden. Ein Mikrodurchflusssystem im Sinne der vorliegenden Erfindung umfasst dann Kanäle und Bauteile, die in ein Substrat, also in eine Grundplatte integriert sind. Aus der Druckschrift US 7,144,616 B1 geht ein solches Mikrodurchflusssystem hervor.

In der pharmazeutischen Industrie werden täglich mehrere hunderttausend verschiedene Substanzen auf ihre Eignung als Ausgangsstoffe für neue Medikamente untersucht. Derartige Anforderungen haben zur Konsequenz, dass Bedarf für Mikrodurchflusssysteme besteht, mit denen kleinste Flüssigkeitsmengen präzise gehandhabt werden können. Mikrodurchflusssysteme werden auch in der industriellen Verfahrenstechnik eingesetzt, um kleinste Flüssigkeitsmengen schnell und gleichmäßig miteinander zu vermischen. Auf biochemischen Gebiet werden Mikrosysteme für die Analyse von biologischen Proben verwendet.

Mikrodurchflusssysteme sind sehr klein und werden zunehmend kleiner gebaut. Die eingesetzten Bauteile müssen entsprechend klein sein. Es besteht daher ein ständiger Bedarf an einer weiteren Miniaturisierung der verwendeten Bauteile. Da solche Mikrodurchflusssysteme regelmäßig nur einmal beispielsweise für die Durchführung einer Analyse verwendet werden können, müssen diese möglichst preiswert ausgeführt sein.

Ein Ventil für das Öffnen und Schließen eines Kanals ist aus der Druckschrift JP 20061 8381 8 A oder aus der Druckschrift US 6,981 ,51 8 B2 bekannt. Gemäß der Druckschrift US 6,981,151 B2 wird ein Ventilelement mit Hilfe eines Hebels linear verfahren, um einen Kanal zu öffnen oder zu verschließen. Verschiedene Bauteile für Mikrodurchflusssysteme werden in der Druckschrift "Chunsun Zhang et al., Micropumps. Microvalves, and micromixers within PCR microfluid chips: Advances and trends, Biotechnology Advances 25 (2007) 483 - 514, Elsevier" beschrieben. Aus dieser Druckschrift geht ein Bauteil hervor, welches dem Öffnen und Verschließen eines Kanals eines Mikrodurchflusssystems dient. Das Bauteil umfasst eine Führung und einem in der Führung geführten Ventilelement. Durch eine lineare Bewegung wird der an die Führung angeschlossene Kanal geöffnet oder geschlossen. Ein Überblick über vorbekannten Ventile für mikrofluidische Durchflusssysteme findet sich ergänzend in J. Micromech. Microeng. 16 (2006) R13-R39, A review of microvalves, Kwang W Oh et al. Aus der Druckschrift WO 2004/105829 A2 geht eine Vorrichtung hervor, die eine Mehrzahl an Drehventilen umfasst, um so verschiedene Zu- und Ableitungen miteinander zu verbinden. Aus der WO 2007/130951 A2 ist ein Ventil bekannt, welches ein drehbares Ventilelement aufweist, das sich in einer Führung befindet. Das Ventilelement ist mit Durchlässen versehen und dient dem Verbinden von Kanalabschnitten, die in die Führung einmünden. Verschiedene Schaltzustände sind möglich.

Die Druckschriften US 2008/016891 A1, DE 27 22 363 A1 und GB 1 195 913 A offenbaren Durchflusssysteme, weiche drehbare Ventilkörper und Pressmittel zum Anpressen der Ventilkörper gegen eine Grundplatte mit Einmündungen vorsehen.

Aus den Druckschriften US 6,012,488 A und US 5 803 117 A sind Mikrodurchflusssysteme bekannt, welche drehbare Ventilkörper umfassen, welche ohne ein Pressen gegen eine Grundplatte unterschiedliche Kanalabschnitte miteinander verbinden können.

Aufgabe der Erfindung ist es, ein System mit einem preiswerten Drehventil und einer Betätigungsvorrichtung für das Drehventil zu schaffen. Es ist ferner eine Aufgabe der Erfindung, ein zugehöriges Durchflusssystem mit einem Drehventil bereitzustellen.

Die Aufgabe der Erfindung wird durch ein System mit den Merkmalen des ersten Anspruchs sowie durch ein Durchflusssystem mit den Merkmalen des Nebenanspruchs gelöst. Vorteilhafte Ausgestaltungen ergeben sich aus den Unteransprüchen.

Zur Lösung der Aufgabe umfasst das beanspruchte System wenigstens zwei getrennte Bauteile, wobei das eine Bauteil ein Drehventil ist, welches eine hohlzylinderförmige Fassung und einen in der Fassung befindlichen zylinderförmigen Ventilkörper aufweist, und das andere Bauteil eine Betätigungsvorrichtung, die mit Pressmitteln versehen ist, mit denen der Ventilkörper auf den Grund der Fassung gepresst werden kann. Durch das Pressen werden Kanaleinmündungen, die in den Grund der Fassung hineinführen, abgedichtet.

Die Bauteile sind grundsätzlich voneinander getrennt. Hierunter ist zu verstehen, dass die zwei Bauteile nicht dauerhaft miteinander verbunden sind. Es handelt sich insbesondere um wirtschaftlich getrennte Einheiten in dem Sinne, dass das eine Bauteil mit dem Drehventil ein Verbrauchsartikel ist, welches immer wieder neu in das andere Bauteil, also in die Betätigungsvorrichtung eingesetzt wird. Das Bauteil mit dem Drehventil kann und soll zwar für einen einmaligen Gebrauch in die Betätigungsvorrichtung eingesetzt werden, damit die Pressmittel den zylinderförmigen Ventilkörper während dieser Zeit gegen den Grund der Fassung drücken können. Allerdings wird das Bauteil mit dem Ventil zu gegebener Zeit wieder herausgenommen und ein neues Bauteil mit Drehventil eingesetzt. Das Bauteil mit Drehventil verfügt also nicht über ein eignes Pressmittel, mit dem der zylinderförmige Ventilkörper gegen den Grund seiner Fassung gedrückt werden kann, um Kanaleinmündungen abzudichten. Hierdurch werden die Kosten für das Bauelement mit dem Drehventil gering gehalten. Das Bauteil mit dem Drehventil kann daher als ein Wegwerfartikel gehandhabt werden, das nach einmaligem Gebrauch entsorgt wird.

In einer Ausführungsform der Erfindung ist das Pressmittel der Betätigungsvorrichtung mit Rastmitteln versehen, die in Vertiefungen auf der Oberseite des Ventilkörpers einrasten können. Die Rastmittel können mit einem Antrieb der Betätigungsvorrichtung gedreht werden. Der Ventilkörper kann bei dieser Ausführungsform durch das Pressmittel also ergänzend gedreht werden, um durch Drehen mit Hilfe von wenigstens einer länglichen Ausnehmung an der Unterseite des Ventilkörpers zwei einmündende Kanäle miteinander verbinden oder trennen zu können.

Weitere Vorteile von beanspruchten Ausführungsformen des beanspruchten Systems ergeben sich aus den unten beschriebenen Ausführungsbeispielen.

Eine ergänzende Aufgabe der Erfindung wird durch ein Durchflusssystem, insbesondere ein Mikrodurchflusssystem mit einer Grundplatte gelöst. In der Grundplatte befinden sich Kanäle. Es gibt wenigstens eine hohlzylinderförmige Fassung auf der Grundplatte und Einmündungen von Kanäle, die in den Grund der Fassung führen. Ein Ventilkörper befindet sich in der Fassung. Der Ventilkörper ist auf der Unterseite mit wenigstens einer Ausnehmung für das flüssigkeitsleitende Verbinden von Kanaleinmündungen versehen ist. Das Durchflusssystem umfasst keine Pressmittel, um den Ventilkörper gegen den Grund seiner Fassung zu pressen. Durch Drehen des Ventilkörpers in der Fassung werden Einmündungen miteinander so verbunden, dass Flüssigkeit durch eine Ausnehmung hindurch von einem Kanal in einen anderen fließen kann. Durch weiteres Drehen kann diese Verbindung zwischen zwei Kanälen auch wieder unterbrochen werden.

Ist der Ventilkörper in die Fassung vollständig eingesetzt, so schließt der Rand der Fassung bevorzugt mit der Oberseite des Ventilkörpers bündig ab. Die Oberseite ragt also nicht gegenüber der Fassung hervor und umgekehrt. Der Ventilkörper wird so von der Fassung einerseits schützend eingehüllt. Andererseits ragt auch kein Rand der Fassung hervor, der leicht abbrechen könnte und letzen Endes überflüssig wäre.

Weitere Vorteile von beanspruchten Ausführungsformen ergeben sich aus der nachfolgenden Beschreibung.

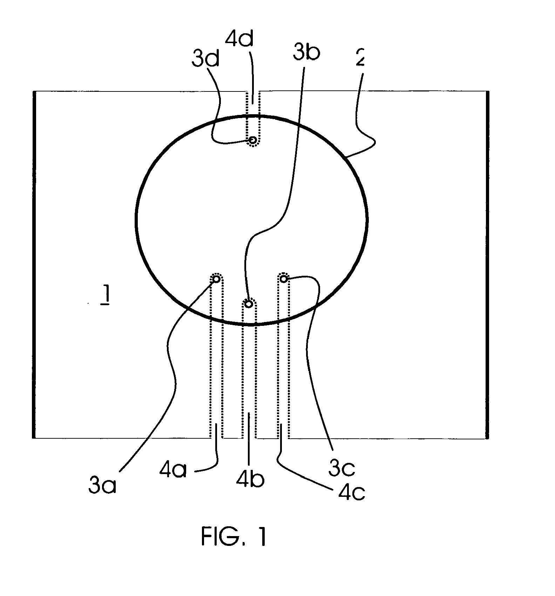

Figur 1 zeigt eine Aufsicht auf einen Ausschnitt ein Durchflusssystem bestehend aus einer Grundplatte 1 , auf der sich eine hohlzylinderförmige Fassung 2 für einen Ventilkörper befindet. Am Grund der Fassung 2, also auf der Oberfläche der Platte 1 befinden sich Bohrungen 3a, 3b, 3c und 3d, die zu Kanälen 4a, 4b, 4c und 4d führen. Die Kanäle münden also über die Bohrungen in den Grund der Fassung 2 ein. Die Kanäle 4a, 4b, 4c und 4d befinden sich innerhalb der Grundplatte 1 . Der Verlauf der Kanäle wird durch gestrichelte Linien angedeutet. Die Kanäle sind Teil eines mikrofluidischen Systems.

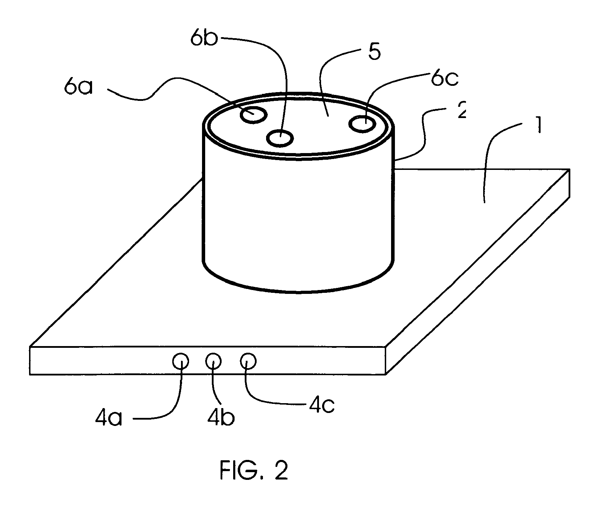

Figur 2 zeigt den Ausschnitt des Durchflusssystems mit der Grundplatte 1 und der Fassung 2 in einer perspektivischen Darstellung. Zusätzlich wird ein in die Fassung 2 eingesetzter zylinderförmiger Ventilkörper 5 dargestellt. Der zylinderförmige Ventilkörper wird gegen den Grund der Fassung gepresst und dichtet zumindest die Bohrungen 3a, 3b, 3c und 3d so ab, dass Flüssigkeit nicht in die Fassung 2 hinein gelangen oder aus dieser austreten kann. Die Unterseite des zylinderförmigen Ventilkörpers 5 ist mit rillenförmigen Ausnehmungen versehen. Der zylinderförmige Ventilkörper 5 kann innerhalb seiner Fassung gedreht werden. In Abhängigkeit von seiner Stellung verbinden die genannten Ausnehmungen beispielsweise zwei Bohrungen miteinander, so dass Flüssigkeit von einem in die Fassung einmündenden Kanal zu einem anderen einmündenden Kanal gelangen kann.

Die Fassung 2 für den Ventilkörper 5 umfasst keine Mittel, um den Ventilkörper gegen den Grund der Fassung zu pressen. Statt dessen ist eine externe Betätigungsvorrichtung vorgesehen, die den Ventilkörper 5 gegen den Grund der Fassung 2 presst. Hierfür ist das Durchflusssystem in die Betätigungsvorrichtung einzusetzen und diese entsprechend zu aktivieren. Der in der Figur 2 dargestellte Aufbau ist entsprechend preiswert und stellt insbesondere einen Wegwerfartikel dar.

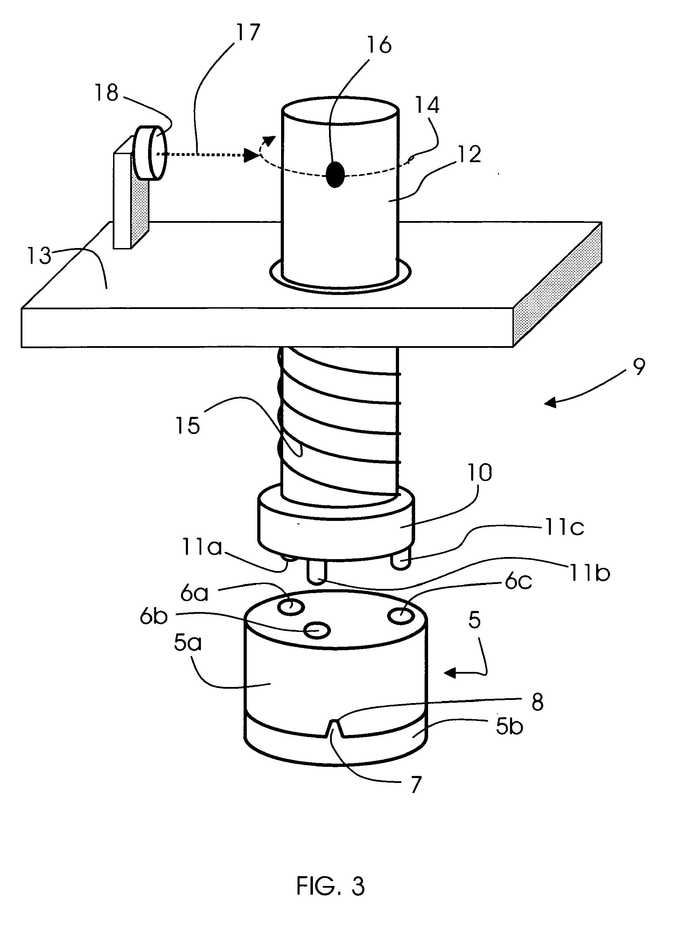

In der Figur 3 ist eine perspektivische Darstellung des zylinderförmigen Ventilkörpers 5 zu sehen, der in der gezeigten Ausführungsform aus einem oberen zylinderförmigen Bereich 5a aus einem relativ harten, inkompressiblen Material und einem unteren scheibenförmigen Bereich 5b aus einem relativ weichen, kompressiblen Material besteht. In den oberen Bereich führen drei Vertiefungen in Form von Bohrungen 6a, 6b und 6c hinein, die allerdings nicht bis zum unteren scheibenförmigen Bereich 5b reichen. Der obere zylinderförmige Bereich ist mit dem unteren scheibenförmigen Bereich 5b beispielsweise verklebt. Außerdem ragen ein oder mehrere Nasen 7 des unteren scheibenförmigen Bereichs 5b in Nuten 8 des oberen zylinderförmigen Bereichs 5a hinein, um so sicherzustellen, dass die beiden Bereiche 5a und 5b drehfest miteinander verbunden sind.

In der Figur 3 wird weiter eine Betätigungsvorrichtung 9 gezeigt, mit der der Ventilkörper betätigt wird, wenn dieser wie in Figur 2 gezeigt in eine Fassung 2 eingesetzt worden ist. Die Betätigungsvorrichtung umfasst eine als Stempel dienende Scheibe 1 0, die mit drei Bolzen 11a, 11b und 11c versehen ist. Die drei Bolzen 11a, 11b und 11c sind so angeordnet und dimensioniert, dass diese in die drei Bohrungen 6a, 6b und 6c durch Absenken der Scheibe relativ zum Ventilkörper hinein gesteckt bzw. eingerastet werden können. Die drei Bohrungen 6a, 6b und 6c und damit auch die drei Bolzen 11a, 11b und 11c sind nicht rotationssymmetrisch angeordnet. Es gibt daher nur genau eine mögliche Stellung der drei Bolzen 11a, 11b und 11c relativ zu den drei Bohrungen 6a, 6b und 6c, um die Bolzen in die Bohrungen hinein bewegen zu können. Die Scheibe 10 ist mit einem unteren Ende eines Stabs 12 fest verbunden, der durch eine kreisrunde Öffnung einer Platte 13 hindurch reicht. Das obere Ende des Stabs 12 ist mit einem nicht dargestellten Antrieb verbunden, mit dem der Stab wie durch den Pfeil angedeutet um seine Längsachse gedreht werden kann. Der Stab 1 2 wird außerdem von einer Feder 15 umgeben. Die Feder 15 befindet sich zwischen der Scheibe 10 und der Platte 13. Wird die Platte 13 nach unten in Richtung Ventilkörper 5 abgesenkt, so wird dadurch die Feder 15 entsprechend gespannt, wenn die drei Bolzen 1 1 a, 11b und 1 1 c auf dem Ventilkörper 5 aufgesetzt sind oder in den drei Bohrungen 6α, 6b und 6c des Ventilkörpers 5 eingerastet sind. Der Stab 12 ist bevorzugt gegen ein Herausrutschen aus der kreisrunden Öffnung der Platte 13 gesichert. Dies kann beispielsweise durch eine nicht dargestellte ringförmige Verbreiterung des Stabs oder einen vergrößerten Durchmesser des Stabs oberhalb der Platte 13 erreicht werden.

Die vorgespannte Feder presst den Ventilkörper 5 auf den Grund der Fassung 2, also auf die entsprechende Oberseite der Grundplatte 1 , wenn die drei Bolzen 11a, 11b und 11c in den drei Bohrungen 6a, 6b und 6c des Ventilkörpers 5 eingerastet sind. Bei hinreichend starkem Druck dichtet dann der untere, relativ weiche Bereich 5b die am Grund der Fassung 2 befindlichen vier Bohrungen 3a, 3b, 3c und 3d so ab, dass keine von den Kanälen 4a, 4b, 4c und 4d kommende Flüssigkeit durch die Bohrungen 3a, 3b, 3c und 3d hindurch nach außen treten kann.

Ist der Stab 12 gegen ein Herausfallen gesichert, so kann die Feder 15 bereits vorgespannt sein, wenn die Vorrichtung 9 noch nicht auf einen Ventilkörper 5 einwirkt.

Durch Regulierung des Abstandes zwischen der Platte 13 und dem Ventilkörper 5 wird der Druck gesteuert, mit der der Ventilkörper gegen den Grund der Fassung 2 gedrückt wird. Durch die Feder 15 wird der Druck ausgeübt, ohne einen entsprechenden Gegendruck auf den Antrieb für den Stab in Kauf nehmen zu müssen. Dies reduziert vorteilhaft Verschleißerscheinungen beim Antrieb.

Wird die Vorrichtung 9 in Richtung Ventilkörper 5 bewegt, so werden die drei Bolzen 1 1 a, 1 1 b und 1 1 c in der Regel erst einmal lediglich auf der Oberseite des Ventilkörpers aufsetzen. Die Platte 13 wird dann noch in geeigneter Weise in Richtung Ventilkörper 5 abgesenkt, so dass die Feder 15 dadurch (weiter) vorgespannt wird und die drei Bolzen 11a, 11b und 11c entsprechend stärker gegen die Oberseite des Ventilkörpers gedrückt werden. Der Stab 1 2 wird durch den Antrieb gedreht, was zur Folge hat, dass die mit drehenden drei Bolzen 11α, 11b und 11c schließlich mit den drei Bohrungen 6α, 6b und 6c fluchten, die sich auf der Oberseite des Ventilkörpers 5 befinden. Ist diese Stellung der drei Bolzen 11α, 11b und 11c relativ zu den drei Bohrungen 6a, 6b und 6c erreicht, so rasten die drei Bolzen 11α, 11b und 11c in die drei Bohrungen 6α, 6b und 6c ein. Ein Drehen des Stabes 12 bewirkt nun ein entsprec hendes Drehen des Ventilkörpers in der Fassung 2.

Befinden sich die drei Bolzen 11a, 1 1 b und 11c in der vorgesehenen Weise in den drei Bohrungen 6a, 6b und 6c, so befindet sich eine am Stab 1 2 angebrachte Markierung in Höhe eines Laserstrahls 17, der von einer Laserdiode 18 erzeugt wird. Die Markierung 16 reflektiert das Laserlicht 17 im Vergleich zum übrigen benachbarten Stabbereich in anderer Weise. So besteht der Stab beispielsweise aus einem gut reflektierenden Metall. Ein schwarzer Fleck stellt eine relativ schlecht reflektierende Markierung dar. Die Reflexion des Laserlichts durch den Stab wird von einem nicht dargestellten Sensor detektiert und von einer Auswerteeinheit ausgewertet. Ändert sich diese Reflexion, weil das Laserlicht 17 auf die Markierung 16 statt auf andere Bereiche des Stabs 12 auftrifft, so bedeutet dies während eines Betriebs, dass die drei Bolzen 11a, 11b und 11c in vorgesehener Weise in die drei Bohrungen 6a, 6b und 6c eingerastet sind. Außerdem ist damit die genaue Stellung des Ventilkörpers relativ zur Fassung 2 bekannt. Wird also die geänderte Reflexion detektiert, so erkennt damit die Vorrichtung sowohl die Stellung der drei Bolzen 11a, 11b und 11c als auch die Stellung des Ventilkörpers innerhalb der Fassung 2.

Befinden sich die drei Bolzen 11a, 11b und 11c dagegen noch außerhalb der drei Bohrungen 6a, 6b und 6c und drücken also lediglich auf die Oberseite des Ventilkörpers 5 aufgrund einer entsprechend abgesenkten Platte 13, so befindet sich die Markierung 16 nicht auf gleicher Höhe mit dem Laserstrahl 17, beispielsweise weil der Laser wie in der Figur 3 gezeigt mit der Platte 13 fest verbunden ist. Die Markierung kann dann nicht detektiert werden. Damit erkennt die Vorrichtung 9, dass die drei Bolzen 11a, 11b und 11c noch nicht in vorgesehener Weise in die drei Bohrungen 6a, 6b und 6c eingerastet sind.

Die Markierung 16 ist so dimensioniert und angeordnet, dass die gewünschten Informationen wie beschrieben durch Detektion und Auswertung der Reflexion des Laserstrahls erhalten werden können.

Anstelle eines Lasers, Detektors für reflektiertes Laserlicht und einer Markierung können auch andere Mittel vorgesehen sein, um die Stellung des Stabs zu ermitteln. So kann beispielsweise anstelle einer anders reflektierenden Markierung eine Kerbe vorgesehen sein. Mit einem Taster, der gegen den Stab drückt, kann das Erreichen der Kerbe durch den Taster erfasst werden. Nachteilhaft erfolgt dann die Erfassung einer Kerbe nicht berührungslos.

Weist der Antrieb für den Stab einen Motor auf, der zugleich eine Winkelmessung ermöglicht, so kann anstelle einer spotförmigen Markierung 16 oder einer entsprechenden Kerbe eine Markierung oder Rille vorgesehen sein, die ringförmig um den Stab herum verläuft. Allerdings ist ein solcher Motor relativ teuer, so dass die zuvor geschilderten Ausführungsformen mit einer spotförmigen Markierung oder Kerbe zu bevorzugen sind.

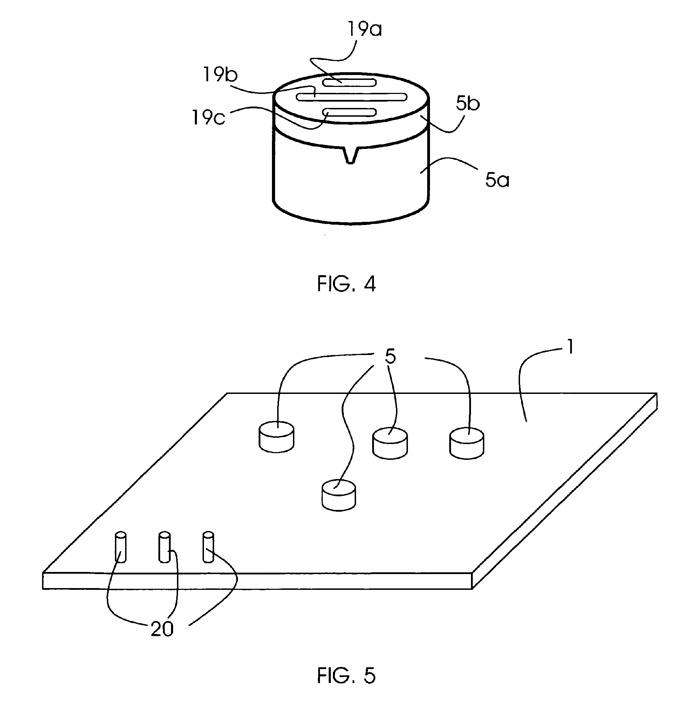

In der Figur 4 wird die Unterseite des Ventilkörpers 5 gezeigt. Diese umfasst drei längliche Ausnehmungen 19a, 19b und 19c. Die länglichen Ausnehmungen 19a, 19b und 19c verbinden Bohrungen 3a, 3b, 3c und 3d am Grund der Fassung 2 flüssigkeitsleitend miteinander, wenn die Position des Ventilkörpers 5 innerhalb der Fassung entsprechend eingestellt worden ist. Wird von dieser Position ausgehend verdreht, so werden flüssigkeitsleitende Verbindungen von Bohrungen 3a, 3b, 3c und 3d aufgehoben und/ oder geändert.

Anstelle der in Figur 1 gezeigten vier Kanäle 4a, 4b, 4c und 4d können auch mehr oder weniger Kanäle in den Grund der Fassung 2 mit Hilfe von Bohrungen einmünden. Um als Ventil zu wirken, münden wenigstens zwei Kanäle in die Fassung ein. An welcher Stelle Bohrungen innerhalb einer Fassung für einen Ventilkörper angeordnet sind, hängt von der Zahl, der Anordnung und/ oder dem Verlauf von Ausnehmungen 19a, 19b, 19c ab, die an der Unterseite des Ventilkörpers 5 vorgesehen sind. Der Verlauf der in Figur 1 gezeigten Kanäle 4a, 4b, 4c, 4d stellt nur ein Beispiel dar. Die Kanäle können auch anders, so zum Beispiel bogenförmig innerhalb der Grundplatte in die Fassung 2 einmünden.

Es ist zwar vorteilhaft, drei Bohrungen 6a, 6b und 6c auf der Oberseite des Ventilkörpers sowie zugehörige drei Bolzen 11α, 11b und 11c bei der Betätigungsvorrichtung 9 vorzusehen. So kann ein Drehmoment von der Betätigungsvorrichtung auf den Ventilkörper übertragen werden, ohne ein Verkanten befürchten zu müssen. Dies gilt insbesondere dann, wenn die Bohrungen um eine Mittelachse des Ventilkörpers herum gruppiert sind und zwar bevorzugt wie dargestellt nahe beim Rand der Oberseite des Ventilkörpers. Es können aber beispielsweise auch nur zwei Bohrungen nebst zugehörigen Bolzen vorgesehen werden. Allerdings können dann leichter während des Betriebs unerwünschte Verkantungen auftreten. Es können auch nur vier und mehr Bohrungen nebst zugehörigen Bolzen vorgesehen werden. Dies erhöht allerdings einerseits den konstruktiven Aufwand, ohne mit einem merklichen Vorteil verbunden zu sein. Außerdem erhöht eine größere Anzahl an Bohrungen grundsätzlich den Platzbedarf, was dem Bestreben nach Miniaturisierung entgegensteht.

Anstelle von Bolzen nebst Bohrungen können auch andere Mittel vorgesehen sein, um einen Ventilkörper mit Hilfe einer Betätigungsvorrichtung zu erfassen. So kann ein in eine Fassung 2 eingesetzter Ventilkörper 5 nach oben aus der Fassung herausragen und in diesem Bereich beispielsweise dreieckig geformt sein. Diese Dreiecksform kann dann mit Hilfe eines entsprechenden dreieckigen Rahmens einer Betätigungsvorrichtung erfasst werden, um den Ventilkörper zu drehen. Eine solche Ausführungsform vergrößert allerdings nachteilhaft grundsätzlich die Höhe des Ventilkörpers.

Anstelle einer Feder 15 nebst Scheibe 10 und Platte 13 können auch andere oder anders geformte Mittel vorgesehen sein, um den Ventilkörper durch eine externe Vorrichtung geeignet gegen den Grund einer Fassung 2 zu pressen. So können anstelle einer Platte beispielsweise ein Ring oder Ringsegmente vorgesehen sein, die gegen die eine Feder 15 nach oben drückt. Anstelle einer Scheibe 10 können anders geformte Halteelemente für eine Feder 15 am unteren Ende des Stabs 12 vorgesehen sein. Auch muss nicht ein Mittel wie die Scheibe 1 0 nebst Bolzen 11a, 11b, 11c, mit denen ein Ventilkörper 5 erfasst wird gegen den Ventilkörper gepresst werden. Statt dessen können beispielsweise ein Ring oder ein oder mehrere Ringsegmente um eine Scheibe 10 herum angeordnet sein, die während des Betriebs gegen die Oberseite eines Ventilkörpers 5 gepresst werden, um so den Ventilkörper auf den Grund einer Fassung 2 zu drücken. Allerdings ist ein solcher Aufbau grundsätzlich etwas komplexer und erfordert tendenziell eine größer Grundfläche auf der Oberseite eines Ventilkörpers 5.

Der Ventilkörper wird bevorzugt durch einen Zweikomponenten-Spritzguss hergestellt, wenn dieser aus zwei verschiedenen Materialien besteht. Allerdings kann der Ventilkörper auch einstückig aus einem Material gefertigt sein. Das Material ist dann so auszuwählen, dass es einerseits die Bohrungen in der Fassung abzudichten vermag und andererseits hart genug ist, um einen Anpressdruck und Drehbewegungen geeignet übertragen zu können. Die Materialauswahl ist jedenfalls einfacher und es stehen mehr mögliche Materialien zu Verfügung, wenn ein oberer zylinderförmiger Bereich hart im Vergleich zu einem unteren scheibenförmigen Bereich des Ventilkörpers ist. Der harte obere Bereich stellt sicher, dass Kräfte und Drücke geeignet nach unten übertragen werden. Der untere, relativ flache weiche Bereich stellt die gewünschte Abdichtung sicher.

Der Ventilkörper rastet bevorzugt in einer Fassung ein, um so gegen ein unbeabsichtigtes Herausfallen aus der Fassung abgesichert zu sein. Es werden so vor allem unerwünschte Verschmutzungen am Grund der Fassung vermieden, die eine Analyse verfälschen könnten. Alternativ oder ergänzend kann ein Ventilkörper in seiner Fassung durch eine Presssitz gehalten werden, was allerdings nachteilhaft die bei einer Drehbewegung zu überwindenden Reibungskräfte erhöht.

Ein Mikrodurchflusssystem umfasst in der Regel eine Mehrzahl von Fassungen nebst Ventilen. In der Grundplatte bzw. im Substrat eines Mikrodurchflusssystems sind in der Regel neben Kanälen ein oder mehrere Kammern integriert, in denen sich Substanzen für die Durchführung von Analysen und/oder Rührgeräte wie Stäbe eines Magnetrührers befinden können. Das Mikrodurchflusssystem umfasst ferner in der Regel ein oder mehrerer Anschlüsse, über die Flüssigkeiten in Kanäle eingeleitet werden können.

Umfasst das Mikrodurchflusssystem ein Rührgerät wie zum Beispiel einen Stab eines Magnetrührers, so ist die Betätigungsvorrichtung vorzugsweise mit Mitteln versehen, mit denen das Rührgerät angetrieben werden kann, wenn das Durchflusssystem in die Betätigungsvorrichtung eingesetzt ist. Ein Analyseverfahren kann so besonders einfach allein mit Hilfe der Betätigungsvorrichtung durchgeführt werden.

Um eine Analyse vollständig in der Betätigungsvorrichtung durchführen zu können, umfasst diese in einer Ausführungsform Heiz- und/ oder Kühlmittel, um Flüssigkeiten geeignet erwärmen oder kühlen zu können. Dies ist beispielsweise der Fall, wenn innerhalb des Durchflusssystems eine Polymerase-Kettenreaktion (PCR) durchgeführt werden soll.

In Figur 5 wird ein Beispiel eines typischen Mikrodurchflusssystems gezeigt. Dieses umfasst eine Mehrzahl von Ventilkörpern 5, die sich in Fassungen befinden. Daneben gibt es Anschlüsse 20, auf die z. B. Schläuche aufgesteckt werden können, um Flüssigkeiten in Kanäle des Mikrodurchflusssystems einleiten zu können. Die Grundplatte ist beispielsweise nicht dicker als ein oder zwei Millimeter. Die Grundfläche der Grundplatte beträgt beispielsweise nicht mehr als 400 cm², bevorzugt nicht mehr als 200 cm². Um preiswert zu fertigen, besteht die Grundplatte nebst Fassungen und Zuleitungen aus einem Kunststoff und wurde insbesondere durch Spritzguss hergestellt. Auf der Grundplatte kann eine besonders großvolumige Kammer vorgesehen sein, die der Aufnahme von Verbrauchsmaterial dient. In diese Kammer mündet ein Kanal ein. Im Übrigen ist die Kammer vollständig verschlossen. Werden chemische oder biologische Abfälle hier gesammelt, so können diese zuverlässig nicht nach außen entweichen, was eine unerwünschte Kontamination zur Folge haben könnte.

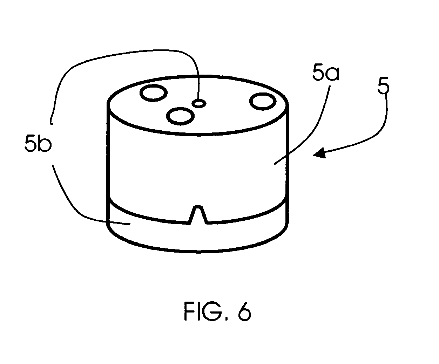

In der Figur 6 wird eine Ausführungsform des Ventilkörpers 5 gezeigt. Das Material des unteren Bereichs 5b erstreckt sich entlang eines zentralen Kanals durch den härteren Bereich 5a hindurch und wird so auf der Oberseite des Ventilkörpers 5 sichtbar. Ausgehend von diesem Kanal erstrecken sich bevorzugt Zapfen horizontal in das harte Material hinein (nicht dargestellt). So wird die drehfeste Verbindung zwischen dem harten und dem weichen Material verbessert sichergestellt.

## Patentansprüche

1. System umfassend wenigstens zwei getrennte Bauteile, wobei das eine Bauteil ein Drehventil ist, welches eine hohlzylinderförmige Fassung (2), einen in der Fassung befindlichen zylinderförmigen Ventilkörper (5) und Einmündungen (3a, 3b, 3c, 3d) von wenigstens zwei Kanälen am Grund der Fassung (2) aufweist,
und das andere Bauteil eine Betätigungsvorrichtung (9), die mit Pressmitteln versehen ist, mit denen der Ventilkörper (5) auf den Grund der Fassung (2) gepresst werden kann.

2. System nach dem vorhergehenden Anspruch, bei dem das Pressmittel der Betätigungsvorrichtung mit Rastmitteln (11a, 1 1 b, 1 1 c) versehen ist, die in Vertiefungen (6a, 6b, 6c) auf der Oberseite des Ventilkörpers einrasten können und die Rastmittel mit einem Antrieb der Betätigungsvorrichtung gedreht werden können und bei dem der Ventilkörper auf seiner Unterseite wenigstens eine längliche Ausnehmung (19a, 19b, 19c) aufweist.

3. System nach einem der vorhergehenden Ansprüche, bei dem das Pressmittel eine vorgespannte Feder (15) umfasst, die zwischen einem Haltemittel (13) der Betätigungsvorrichtung und einem beweglich gelagerten Stempel (10) angeordnet ist, wobei der Stempel (10) so dimensioniert und angeordnet ist, dass dieser den Ventilkörper (5) gegen den Grund der Fassung (2) zu pressen vermag.

4. System nach dem vorhergehenden Anspruch, bei dem die Position des Haltemittels (13) einstellbar ist, um so den Anpressdruck regulieren zu können.

5. System nach einem der vorhergehenden Ansprüche, bei dem der Stempel (10) an einem Stab (12) befestigt ist und der Stab mit einem Antriebsmittel versehen ist, mit dem der Stab automatisiert gedreht werden kann.

6. System nach einem der vorhergehenden Ansprüche, bei dem der Stab über Detektormittel (18, 16) verfügt, um die Stellung des Stabes relativ zum Ventilkörper (5) ermitteln zu können, wenn das Bauteil mit dem Drehventil in die Betätigungsvorrichtung eingesetzt ist.

7. Durchflusssystem, insbesondere Mikrodurchflusssystem, mit einer Grundplatte (1), in der Grundplatte befindlichen Kanälen (4α, 4b, 4c, 4d), mit wenigstens einer hohlzylinderförmigen Fassung (2) auf der Grundplatte, mit Einmündungen (3a, 3b, 3c, 3d) von Kanälen (4α, 4b, 4c, 4d) in den Grund der Fassung (2), mit einem in der Fassung befindlichen, drehbaren Ventilkörper (5), der auf der Unterseite mit wenigstens einer Ausnehmung (19α, 19b, 19c) für das flüssigkeitsleitende Verbinden von Kanaleinmündungen (3α, 3b, 3c, 3d) versehen ist und der gegen den Grund der Fassung (2) gedrückt werden kann, um Kanaleinmündungen abzudichten, wobei das Durchflusssystem keine Pressmittel umfasst, um den Ventilkörper (5) gegen den Grund der Fassung (2) zu pressen, **dadurch gekennzeichnet, dass** das Durchflusssystem von einer Betätiaungsvorrichtung (9), die mit Pressmitteln versehen ist, mit denen der Ventilkörper (5) auf den Grund der Fassung (21) gepresst werden kann, getrennt ist.

8. Durchflusssystem nach dem vorhergehenden Anspruch, bei dem der Rand der Fassung (2) mit der Oberseite des Ventilkörpers (5) bündig abschließt.

9. Durchflusssystem nach einem der beiden vorhergehenden Ansprüche, bei dem der Ventilkörper aus einem harten zylinderförmigen oberen Bereich (5a) und einer weichen unteren Scheibe (5b) zusammengesetzt ist.

10. Durchflusssystem nach einem der drei vorhergehenden Ansprüche, bei dem die Oberseite des Ventilkörpers mit drei Bohrungen (6a, 6b, 6c) versehen ist.

11. Durchflusssystem nach dem vorhergehenden Anspruch, bei dem die drei Bohrungen (6a, 6b, 6c) nicht symmetrisch auf der Oberfläche verteilt sind.

12. Durchflusssystem nach einem der fünf vorhergehenden Ansprüche, bei dem die Grundplatte (1) mit wenigstens einer Kammer versehen ist.

13. Durchflusssystem nach dem vorhergehenden Anspruch, bei dem in einer Kammer ein Rührmittel vorhanden ist.

14. Durchflusssystem nach einem der sieben vorhergehenden Ansprüche, bei dem die Grundplatte nicht dicker als 2 mm, bevorzugt nicht dicker als 1 mm ist.

15. Verwendung einer Vorrichtung nach einem der vorhergehenden Ansprüche für die Durchführung einer chemischen, biologischen oder medizinischen Analyse.

## Claims

1. A system comprising at least two separate components, wherein the one component is a turning valve which comprises a holder (2) in the form of a hollow cylinder, a cylindrical valve body (5) placed in the holder and junctions (3a, 3b, 3c, 3d) of at least two channels on the bottom of the holder,
and the other component is an actuating device (9) which is provided with pressing means, by means of which the valve body (5) can be pressed onto the bottom of the holder (2).

2. A system according to the preceding claim, in which the pressing means of the actuating device is provided with snap-in means (11 a, 11 b, 11c) which can lock in cavities (6a, 6b, 6c) on the top side of the valve body and the snap-in means can be rotated by a drive of the actuating device, and in which the valve body comprises at least one longitudinal recess (19a, 19b, 19c) on its bottom side.

3. A system according to one of the preceding claims, in which the pressing means comprises a pre-stressed spring (15) which is placed between a holding means (13) of the actuating device and a movably accommodated plunger (10), wherein the plunger (10) is dimensioned and placed such that this one is able to press the valve body (5) against the bottom of the holder (2).

4. A system according to the preceding claim, in which the position of the holding means (13) can be set in order to be able to adjust the pressure force.

5. A system according to one of the preceding claims, in which the plunger (10) is attached to a bar (12) and the bar is provided with a drive means, by means of which the bar can be rotated in an automatized way.

6. A system according to one of the preceding claims, in which the bar comprises detector means (18, 16) in order to detect the position of the bar with respect to the valve body (5), if the component comprising the turning valve is inserted into the actuating device.

7. A flow system, in particular a micro flow system, comprising a base plate (1), channels (4a, 4b, 4c, 4d) arranged in the base plate, comprising at least one holder (2) shaped as a hollow cylinder on the base plate, comprising junctions (3a, 3b, 3c, 3d) of channels (4a, 4b, 4c, 4d) into the bottom of the holder (2), comprising a rotatable valve body (5) arranged in the holder, which valve body is provided with at least one recess (19a, 19b, 19c) on the bottom side for the liquid conducting connection of channel junctions (3a, 3b, 3c, 3d) and which valve body can be pressed against the bottom of the holder (2) in order to seal channel junctions, wherein the flow system does not comprise any pressing means for pressing the valve body (5) against the bottom of the holder (2), **characterized in that** the flow system is separate from an actuating device (9) which is provided with pressing means by means of which the valve body (5) can be pressed onto the bottom of the holder (2).

8. A flow system according to the preceding claim, in which the border of the holder (2) is flush with the top side of the valve body (5).

9. A flow system according to one of the two preceding claims, in which the valve body is composed of a hard cylindrical upper portion (5a) and a soft lower disk (5b).

10. A flow system according to one of the three preceding claims, in which the top side of the valve body is provided with three bores (6a, 6b, 6c).

11. A flow system according to the preceding claim, in which the three bores (6a, 6b, 6c) are not symmetrically distributed on the top side.

12. A flow system according to one of the five preceding claims, in which the base plate (1) is provided with at least one chamber.

13. A flow system according to the preceding claim, in which a stirring means is present in a chamber.

14. A flow system according to one of the seven preceding claims, in which the thickness of the base plate does not exceed 2 mm, preferably 1 mm.

15. A use of a device according to one of the preceding claims for the execution of a chemical, biological or medical analysis.

## Revendications

1. Système comprenant au moins deux composants séparés, l'un des composants étant une soupape rotative qui comprend un châssis (2) sous forme de cylindre creux, un corps de soupape cylindrique (5) disposé dans le châssis et des débouchures (3a, 3b, 3c, 3d) d'au moins deux canaux au fond du châssis (2),
et l'autre composant étant un dispositif d'actionnement (9) qui est muni des moyens de pression à l'aide desquels le corps de soupape (5) peut être pressé sur le fond du châssis (2).

2. Système selon la revendication précédente, dans lequel le moyen de pression du dispositif d'actionnement est muni ders moyen d'encliquetage (11a, 11 b, 11 c) qui peuvent s'encliqueter dans des cavités (6a, 6b, 6c) sur la face supérieure du corps de soupape et les moyens d'encliquetage peuvent être tournés par un entraînement du dispositif d'actionnement, et dans lequel le corps de soupape comprend au moins un évidement longitudinal (19a, 19b, 19c) sur sa face inférieure.

3. Système selon l'une des revendications précédentes, dans lequel le moyen de pression comprend un ressort précontraint (15) qui est disposé entre un moyen de retenue (13) du dispositif d'actionnement et un plongeur (10) logé de manière mobile, le plongeur (10) étant dimensionné et disposé de sorte que celui-ci est capable de presser le corps de soupape (5) contre le fond du châssis (2).

4. Système selon la revendication précédente, dans lequel on peut ajuster la position du moyen de retenue (13) pour pouvoir ainsi réguler la force de pression.

5. Système selon l'une des revendications précédentes, dans lequel le plongeur (10) est fixé à une barre (12) et la barre est munie d'un moyen d'entraînement par moyen duquel la barre peut être tournée de manière automatisée.

6. Système selon l'une des revendications précédentes, dans lequel la barre comprend des moyens de détecteur (18, 16) pour pouvoir détecter la position de la barre par rapport au corps de soupape (5), si le composant comprenant la soupape rotative est inséré dans le dispositif d'actionnement.

7. Système de passage, notamment système de passage micro, comprenant une plaque de base (1), des canaux (4a, 4b, 4c, 4d) présents dans la plaque de base, comprenant au moins un châssis (2) sous forme de cylindre creux sur la plaque de base, comprenant des débouchures (3a, 3b, 3c, 3d) des canaux (4a, 4b, 4c, 4d) dans le fond du châssis (2), comprenant un corps de soupape (5) rotative qui se trouve dans le châssis, le dit corps de soupape étant muni d'au moins un évidement (19a, 19b, 19c) sur sa face inférieure pour une connexion conductrice de liquide des débouchures de canaux (3a, 3b, 3c, 3d) et le dit corps de soupape étant susceptible d'être pressé contre le fond du châssis (2) pour étancher des débouchures de canaux, le système de passage ne comprenant pas de moyens de pression pour presser le corps de soupape (5) contre le fond du châssis (2) **caractérisé en ce que** le système de passage est séparé d'un dispositif d'actionnement (9) qui est muni des moyens de pression par l'intermédiaire desquels le corps de soupape (5) peut être pressé sur le fond du châssis (2).

8. Système de passage selon la revendication précédente, dans lequel le bord du châssis (2) est à fleur de la face supérieure du corps de soupape (5).

9. Système de passage selon l'une des deux revendications précédentes, dans lequel le corps de soupape est composé d'une partie supérieure dure et cylindrique (5a) et d'un disque inférieure doux (5b).

10. Système de passage selon l'une des trois revendications précédentes, dans lequel la face supérieure du corps de soupape est munie de trois trous de forage (6a, 6b, 6c).

11. Système de passage selon la revendication précédente, dans lequel les trois trous de forage (6a, 6b, 6c) ne sont pas distribués de manière symétrique sur la face supérieure.

12. Système de passage selon l'une des cinq revendications précédentes, dans lequel la plaque de base (1) est munie d'au moins une chambre.

13. Système de passage selon la revendication précédente, dans lequel un moyen d'agitation est présent dans une chambre.

14. Système de passage selon les sept revendications précédentes, dans lequel l'épaisseur de la plaque de base n'est pas plus de 2 mm, de préférence pas plus de 1 mm.

15. Utilisation d'un dispositif selon l'une des revendications précédentes pour réaliser une analyse chimique, biologique ou médicale.
